# FASCICULE DE BREVET EUROPEEN

(11) **EP 1 664 234 B1**
(45) Date de publication et mention de la délivrance du brevet: **09.12.2009**
(21) Numéro de dépôt: 04787286.6
(22) Date de dépôt: 02.09.2004
(51) Int. Cl.: C09K 5/04

(54) **COMPOSITION A BASE D HFC (HYDROFLUOROCARBURES) ET SON UTILISATION**
HYDROFLUORCARBONBASIERTE ZUSAMMENSETZUNG UND DEREN VERWENDUNG
HYDROFLUOROCARBON-BASED COMPOSITION AND USE THEREOF

(30) Priorité: 19.09.2003 FR 0311025
(43) Date de publication de la demande: 07.06.2006
(60) Demande divisionnaire: 08171320.8
(73) Titulaire: ARKEMA FRANCE, 92700 Colombes (FR)
(72) Inventeur: GUILPAIN, Gérard, F-69126 Brindas (FR); CARON, Laurent, 69110 Sainte Foy Les Lyon (FR)
(74) Mandataire: Dang, Doris
(86) Numéro de dépôt international: PCT/FR2004/002231
(87) Numéro de publication internationale: WO 2005/028586

(56) Documents cités:
- EP-A- 0 536 940
- EP-A- 0 979 855
- EP-A- 1 072 850
- WO-A-00/29796
- WO-A-94/11459
- GB-A- 2 269 004
- US-A- 5 097 667
- US-A1- 2003 070 722
- PATENT ABSTRACTS OF JAPAN vol. 1996, no. 08, 30 août 1996 (1996-08-30) & JP 08 100170 A (ASAHI GLASS CO LTD), 16 avril 1996 (1996-04-16) -& JP 08 100170 A (ASAHI GLASS CO LTD) 16 avril 1996 (1996-04-16)

## Description

La présente invention a pour objet une composition à base d'HFC (HydroFluoroCarbures), son utilisation en réfrigération et/ou conditionnement d'air, ainsi qu'un système de transfert de chaleur la contenant.

Les systèmes de transfert de chaleur incluent notamment les réfrigérateurs, les pompes à chaleur et les systèmes d'air conditionné.

Dans de tels dispositifs, un fluide frigorifique de point d'ébullition convenable est évaporé à basse pression, en prenant de la chaleur dans un premier milieu (ou zone) environnant. La vapeur ainsi formée est alors compressée au moyen d'un compresseur et passe ensuite dans un condenseur dans lequel elle est transformée à l'état liquide en donnant lieu à un dégagement de chaleur dans une deuxième zone environnante. Le liquide ainsi condensé circule ensuite dans un détenteur à la sortie duquel il se transforme en un mélange biphasique de liquide et de vapeur, lequel est enfin introduit dans l'évaporateur où le liquide est de nouveau évaporé à basse pression, ce qui complète le cycle.

L'énergie mécanique requise pour assurer la compression de la vapeur et la circulation du fluide est assurée par un moteur électrique ou à combustion interne. Comme dans tout dispositif mécanique, il est nécessaire que les parties en mouvement soient convenablement lubrifiées. Les lubrifiants utilisés font partie intégrante du système de transfert de chaleur et conditionnent à la fois ses performances et sa durée de vie par le maintien dans le temps d'une lubrification convenable.

En particulier, le fluide frigorifique qui est à chaque passage dans le compresseur en contact avec le lubrifiant présent sur ses parties mobiles, tend à en emporter une certaine quantité, laquelle accompagne le fluide frigorifique dans son cycle et se retrouve donc dans l'évaporateur. Or ce dernier est généralement porté à une basse température, à laquelle la viscosité du lubrifiant est particulièrement élevée, de telle sorte que ce dernier risque de s'accumuler dans l'évaporateur et n'a donc plus la possibilité de revenir vers le compresseur, ce retour étant qualifié dans le présent texte de "retour d'huile".

Ainsi, si le retour d'huile est insuffisant, la quantité de lubrifiant présente sur les parties mobiles du compresseur ne peut être maintenue constante dans le temps, ce qui porte donc atteinte au fonctionnement convenable du dit compresseur et à sa durée de vie.

Il est donc nécessaire d'utiliser un couple fluide frigorifique/huile qui soit parfaitement compatible, notamment en ce qui concerne le retour d'huile.

Le R-22 ou monochlorodifluorométhane est un réfrigérant de type HCFC (HydroChloroFluoroCarbure) largement utilisé dans des applications de transfert de chaleur incluant la climatisation fixe, la réfrigération commerciale et industrielle, ainsi que pour les pompes à chaleur. Il existe actuellement de nombreux systèmes de transfert de chaleur conçus pour le R-22 ; les lubrifiants mis en oeuvre, car adaptés au R-22 notamment en ce qui concerne le retour d'huile, sont soit des huiles minérales soit des huiles alkylbenzène.

Bien que le R-22 ait un potentiel de destruction d'ozone (ci-après ODP) très faible, son utilisation est cependant également l'objet de restriction, et de nouveaux produits à base d'HFC (HydroFluoroCarbures) ont été développés, particulièrement avantageux pour la couche d'ozone stratosphérique, puisque les HFC présentent un ODP nul.

Parmi ces produits, le R-407C a notamment été développé pour remplacer le R-22 dans des applications de conditionnement d'air. Ce produit est un mélange associant les R-32, R-125, R-134a dans les proportions de 23/25/52 % en poids. Le R-32 est la dénomination usuelle dans le métier du difluorométhane, le R-125 est le pentafluoroéthane, et le R-134a désigne le 1,1,1,2-tétrafluoroéthane. Le R-407C possède des propriétés thermodynamiques qui approchent étroitement celles du R-22. De ce fait, le R-407C peut être utilisé dans les anciens systèmes conçus pour fonctionner avec le R-22, permettant ainsi le remplacement d'un fluide HCFC par un fluide HFC plus sûr vis à vis de la couche d'ozone stratosphérique, dans le cadre d'une procédure de conversion de ces anciens systèmes. Les propriétés thermodynamiques concernées sont bien connues de l'homme de l'art et sont notamment la capacité frigorifique, l'efficacité énergétique (ou COP) et la pression de condensation.

La capacité frigorifique représente la puissance frigorifique disponible grâce au fluide frigorigène, pour un compresseur donné. Pour remplacer le R-22, il est impératif de disposer d'un fluide dont la capacité frigorifique est élevée et proche de celle du R-22.

Le COP exprime le rapport de l'énergie de réfrigération délivrée à l'énergie appliquée au compresseur pour comprimer le fluide frigorifique à l'état de vapeur. Dans le cadre de la substitution du R-22, une valeur du COP du fluide inférieure à celle du R-22 est convenable si l'on accepte d'augmenter la consommation électrique de l'installation.

Enfin la pression de condensation indique la contrainte exercée par le fluide sur les parties mécaniques correspondantes du circuit frigorifique. Un fluide capable de remplacer le R-22 dans un système frigorifique conçu pour ce dernier ne doit pas présenter de pression de condensation significativement supérieures à celles du R-22.

Ces nouveaux produits à base d' HFC, et notamment le R-407C, ne sont cependant pas compatibles avec les huiles minérales ou alkylbenzène utilisées pour les systèmes fonctionnant avec le R-22 en ce qui concerne la lubrification des organes mécaniques, notamment en raison d' un retour d'huile insuffisant. Ils nécessitent ainsi l'utilisation de nouvelles huiles, de type PolyOlEster (POE) ou PolyalkylèneGlycol (PAG).

Le remplacement, dans les nombreux systèmes de transfert de chaleur existants qui ont été conçus pour fonctionner avec du R-22, de ce dernier fluide par un fluide présentant des performances thermodynamiques proches et un potentiel de destruction de l'ozone égale à 0, nécessite donc, outre le remplacement du fluide frigorigène, le changement de l'huile de lubrification, voire des changements de certains composants du circuit frigorifique tels que les joints et tuyaux de connexion. Une telle procédure de conversion est quasiment impossible avec certains matériels de compression largement répandus, tel le compresseur hermétique. Elle est dans tous les cas longue, pénible et coûteuse, d'autant plus que pour éliminer la totalité d'huile, plusieurs rinçages avec la nouvelle huile sont nécessaires.

Par ailleurs, le document JP 8-100170 divulgue une composition quaternaire contenant du difluorométhane, du trifluoroéthane, du tetrafluoroéthane et du pentafluoroéthane en remplacement du R-502.

La présente invention a pour objet une composition consistant essentiellement de 15 à 35 % en poids de R-32, de 10 à 50 % en poids de R-125, de 30 à 50 % en poids de R-134a et de 5 à 20 % en poids de R-143a. Une composition consistant essentiellement de 15 à 30 % en poids de R-32, de 20 à 40 % en poids de R-125, de 35 à 50 % en poids de R-134a et de 5 à 15 % en poids de R-143a est préférée. Le R-143a désigne le 1,1,1 trifluoroéthane.

Cette composition peut se substituer au R-22 dans ses diverses applications, notamment pour le conditionnement d'air. Elle présente avantageusement des performances thermodynamiques qui lui permettent de se substituer sans inconvénient au R-22 dans une installation de transfert de chaleur conçue pour fonctionner avec ce fluide, en permettant notamment un retour d'huile satisfaisant malgré la présence d'une quantité résiduelle d'ancienne huile minérale ou alkylbenzène dans la nouvelle huile de type POE après l'opération de rinçage (ou nettoyage). Ainsi l'opération de rinçage peut être allégée.

Les compositions spécifiques suivants en poids sont particulièrement avantageuses :
- R-32 = 25%, R-125 = 25 %, R 134a = 40 % et R 143a = 10 %
- R-32 = 20 %, R-125 = 35 %, R 134a = 35 % et R 143a = 10 %
- R-32 = 20%, R-125=.30%, R 134a = 35% et R 143a = 15%
- R-32=15%, R-125= 25 % R 134a = 50 % et R 143a = 10 %

La composition selon l'invention est donc utilisable comme fluide frigorifique dans un système de transfert de chaleur adapté au R-22 et comprenant comme lubrifiant une huile POE ou PAG. Le lubrifiant peut comprendre des quantités résiduelles d'huile minérale
ou d'alkylbenzène issues de l'opération de rinçage. La présente invention a également pour objet cette utilisation.

La composition objet de la présente invention peut-être préparée par des méthodes bien connues de l'homme du métier, telles que par la réalisation d'un mélange de chacun de ses composants à l'état liquide dans les proportions désirées.

La présente invention a enfin pour objet un système de transfert de chaleur adapté au R-22 et comprenant comme fluide frigorigène la composition telle que définie précédemment.

Le lubrifiant mis en oeuvre dans un tel système est avantageusement une huile type polyolester ou type polyalkylène glycol.

Les systèmes de transfert de chaleur sont des systèmes frigorifiques, des systèmes de conditionnement d'air ou des pompes à chaleur. Les systèmes de conditionnement d'air sont particulièrement préférés.

Les exemples qui suivent sont présentés à titre purement illustratifs.

### Exemples :

Diverses compositions selon la présente invention ont été préparées et soumises aux tests suivants.

### a) Retour d'huile :

Une charge de 10 g d'un mélange d'huile minérale (HM) ou d'huile alkylbenzène (AB) avec une huile PolyOlEster (POE) est introduite dans un serpentin réfrigéré (1) placé dans un cryostat (2) à 0°C.

Ce serpentin est relié en amont, par l'intermédiaire d'une conduite munie d'une vanne d'arrêt (3) et d'un capteur de pression (4) à une bouteille (5) contenant la composition selon l'invention à tester, équipée d'un tube plongeur et placée dans un bain à 30°C.

Le serpentin est prolongé en aval par une conduite munie d'une vanne de régulation (6) et d'une vanne d'arrêt (7) qui arrive dans la partie inférieure d'une bouteille de récupération (8) placée dans un bain chauffant à 60 °C. Une conduite issue de la partie supérieure de la bouteille de récupération est munie d'un compteur à gaz (9).

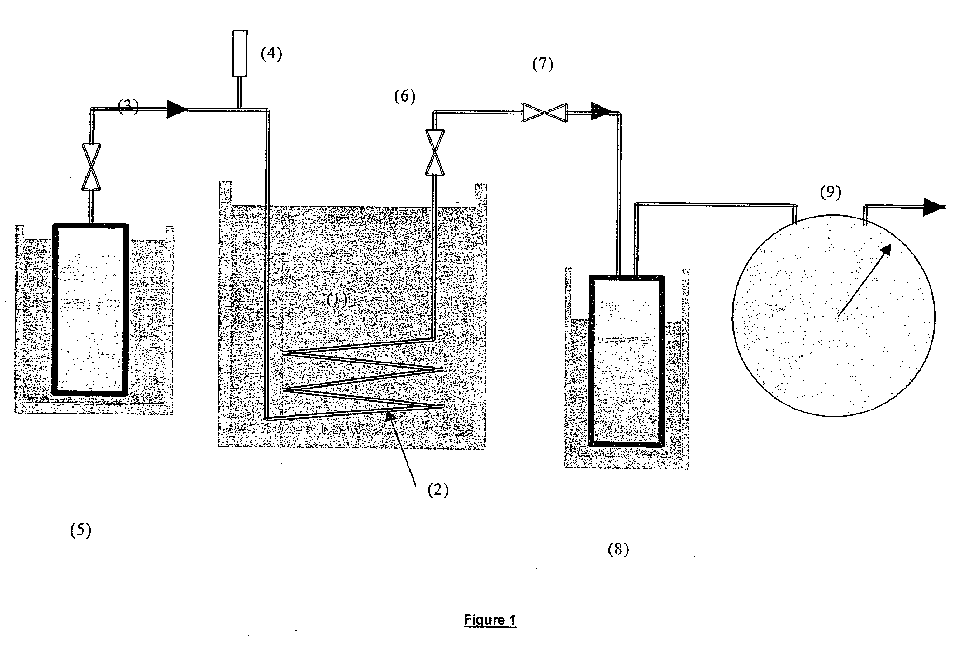

Le circuit décrit sur la figure 1 est représentatif d'un circuit frigorifique au voisinage de l'évaporateur, et le test de retour d'huile consiste à mesurer la fraction de la charge d'huile placée dans le serpentin qui est emportée par le fluide frigorigène.

On fait circuler pendant 15 minutes, par ouverture initiale de la vanne d'arrêt (7) puis de la vanne d'arrêt (3), un courant de la composition selon l'invention à tester, à raison d'un débit d'environ 1 m³/h mesuré à température ambiante et sous 1 atmosphère, à travers le circuit décrit précédemment et notamment dans le serpentin contenant la charge d'huile.

A la fin de l'essai, la quantité d'huile récupérée dans la bouteille (8) est pesée.

Le taux de récupération ou "retour d'huile" (exprimé en pourcentage) est égal au poids de l'huile ainsi récupérée divisée par le poids de la charge d'huile placée initialement dans le serpentin. Le taux maximal admissible d'huile minérale ou alkylbenzène dans une huile POE est définie comme étant celui au delà duquel le retour d'huile du mélange est inférieur à celui du R-22 dans les mêmes conditions du test.

### b) Performances thermodynamiques :

Les performances de la composition selon l'invention ont été évaluées sur une boucle frigorifique dont les conditions de fonctionnement sont : une température d'évaporation de 0°C, une température à l'aspiration du compresseur de 15°C, une température de condensation de 40°C et un sous-refroidissement du liquide en sortie de condenseur de 5K.

Les teneurs en R-32, R-125, R-134a et R-143a des différentes compositions préparées, ainsi que leurs performances thermodynamiques sont rassemblées dans le Tableau 1. A titre de référence, celles pour le R-22 et R-407C sont également indiquées. Nous avons reporté le retour d'huile du R-407C, des différentes compositions préparées et du R-22 pour divers mélanges d'huile POE avec une huile alkylbenzene (tableau 2) ou une huile minérale (tableau 3). Par extrapolation à un retour d'huile équivalent à celui en présence du R-22, nous pouvons obtenir le taux d'huile alkylbenzene ou minérale maximale admissible dans la POE pour que le retour d'huile ne soit pas inférieur à celui en présence de R-22 (tableau 4).

Il apparaît que les compositions illustrées ont une capacité frigorifique supérieure au R-407C et supportent des taux maximaux admissibles d'huile minérale ou alkylbenzène plus élevés que le R-407C.

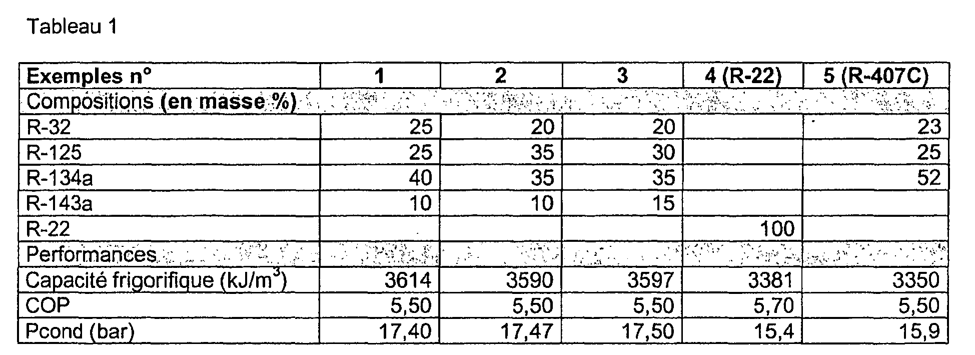

**Tableau 2 : retour d'huile avec mélange de POE et d'huile alkylbenzene en %**

| | **Teneur en huile AB dans le mélange** | | | |
|---|---|---|---|---|
| | 15% | 20% | 25% | 50% |
| R-22 | 100% | 100% | 100% | 100% |
| R-407C | 95,0 | 90,5 | 84,5 | 59,5 |
| Exemple 1 | 98,5 | 94,0 | 89,0 | 63,5 |
| Exemple 2 | 98,5 | 95,0 | 88,0 | 63,0 |
| Exemple 3 | 98,5 | 93,5 | 90,0 | 63,5 |

**Tableau 3 : retour d'huile avec mélange de POE et d'huile minérale en %**

| | Teneur en huile HM dans le mélange | | | |
|---|---|---|---|---|
| | 10% | 15% | 20% | 25% |
| R-22 | 100 | 100 | 100 | 100 |
| R-407C | 97,0 | 91,0 | 88,0 | 83,0 |
| exemple 1 | 99,5 | 95,0 | 90,0 | 86,0 |
| exemple 2 | 99,0 | 94,5 | 90,0 | 86,0 |
| Exemple 3 | 99,5 | 95,0 | 90,5 | 86,0 |

**Tableau 4 : Taux maximal d'huile HM ou AB**

| Exemple | 1 | 2 | 3 | R-407C |
|---|---|---|---|---|
| Huile HM | 9,3% | 8,8% | 9,3% | 6,2% |
| Huile AB | 13,8% | 14,0% | 14,0% | 10,1% |

| | | | | |
|---|---|---|---|---|
| Huile HM : SUNISO 3 GS Huile AB : BARELF AL55 Huile POE : PLANETELF ACD 32 | | | | |

### Exemple 6 :

On opère comme pour les exemples précédents sauf que la composition selon l'invention contient 15 % en poids de R-32, 25 % en poids de R-125, 50 % en poids de R-134a et 10 % en poids de R-143a.

La capacité frigorifique d'une telle composition est de 3240 KJ/m³, le COP est de 5,6 et la pression de condensation est de 15,5 bar.

Le taux maximal admissible d'huile minérale est de 10,7 % et celui de l'alkylbenzène est de 14 %.

### Exemple 7 (comparatif) :

On opère comme précédemment mais avec une composition contenant 20 % en poids de R-32, 45 % en poids de R-125, 15 % en poids de R-134a et 20 % en poids de R-143a.

La capacité frigorifique d'une telle composition est de 3950 KJ/m³, le COP est de 5,3 et la pression de condensation est de 19,7 bar.

Le taux maximal admissible d'huile minérale est de 7,3 % et celui de l'alkylbenzène est de 14 %.

## Revendications

1. Composition consistant essentiellement de 15 à 35 % en poids de R-32, de 10 à 50 % en poids de R-125, de 30 à 50 % en poids de R-134a et de 5 à 20 % en poids de R-143a.

2. Composition selon la revendication 1 **caractérisée en ce qu'**elle consiste en 15-30 % en poids de R-32, de 20-40 % en poids de R-125, de 35 à 50 % en poids de R-134a et de 5 à 15 % en poids de R-143a.

3. Composition selon la revendication 1 ou 2 **caractérisée en ce qu'**elle consiste en 25 % en poids de R-32, 25 % en poids de R-125, 40 % en poids de R-134a et de 10 % en poids de R-143a.

4. Composition selon l'une quelconque des revendications précédentes **caractérisée en ce qu'**elle consiste en 20 % en poids de R-32, 35 % en poids de R-125, 35 % en poids de R-134a et de 10 % en poids de R-143a.

5. Composition selon l'une quelconque des revendications précédentes **caractérisée en ce qu'**elle consiste en 20 % en poids de R-32, 30 % en poids de R-125, 35 % en poids de R-134a et de 15 % en poids de R-143a.

6. Composition selon l'une quelconque des revendications précédentes **caractérisée en ce qu'**elle consiste en 15 % en poids de R-32, 25 % en poids de R-125, 50 % en poids de R-134a et de 10 % en poids de R-143a.

7. Fluide frigorigène comprenant une composition selon les revendications 1 à 6.

8. Système de transfert de chaleur contenant le fluide frigorifique selon la revendication 7.

## Claims

1. Composition composed essentially of 15 to 35% by weight of R-32, of 10 to 50% by weight of R-125, of 30 to 50% by weight of R-134a and of 5 to 20% by weight of R-143a.

2. Composition according to Claim 1, **characterized in that** it consists of from 15 to 30% by weight of R-32, from 20 to 40% by weight of R-125, from 35 to 50% by weight of R-134a and from 5 to 15% by weight of R-143a.

3. Composition according to Claim 1 or 2, **characterized in that** it consists of 25% by weight of R-32, 25% by weight of R-125, 40% by weight of R-134a and 10% by weight of R-143a.

4. Composition according to any one of the preceding claims, **characterized in that** it consists of 20% by weight of R-32, 35% by weight of R-125, 35% by weight of R-134a and 10% by weight of R-143a.

5. Composition according to any one of the preceding claims, **characterized in that** it consists of 20% by weight of R-32, 30% by weight of R-125, 35% by weight of R-134a and 15% by weight of R-143a.

6. Composition according to any one of the preceding claims, **characterized in that** it consists of 15% by weight of R-32, 25% by weight of R-125, 50% by weight of R-134a and 10% by weight of R-143a.

7. Refrigerant, comprising a composition according to Claim 1 to 6.

8. Heat transfer system, comprising the refrigerant according to Claim 7.

## Patentansprüche

1. Zusammensetzung, die im Wesentlichen besteht aus 15 bis 35 Gew.-% R-32, 10 bis 50 Gew.-% R-125, 30 bis 50 Gew.-% R-134a und 5 bis 20 Gew.-% R-143a.

2. Zusammensetzung nach Anspruch 1, **dadurch gekennzeichnet, dass** sie besteht aus 15 bis 30 Gew.-% R-32, 20 bis 40 Gew.-% R-125, 35 bis 50 Gew.-% R-134a und 5 bis 15 Gew.-% R-143a.

3. Zusammensetzung nach Anspruch 1 oder 2, **dadurch gekennzeichnet, dass** sie besteht aus 25 Gew.-% R-32, 25 Gew.-% R-125, 40 Gew.-% R-134a und 10 Gew.-% R-143a.

4. Zusammensetzung nach einem der vorhergehenden Ansprüche, **dadurch gekennzeichnet, dass** sie besteht aus 20 Gew.-% R-32, 35 Gew.-% R-125, 35 Gew.-% R-134a und 10 Gew.-% R-143a.

5. Zusammensetzung nach einem der vorhergehenden Ansprüche, **dadurch gekennzeichnet, dass** sie besteht aus 20 Gew.-% R-32, 30 Gew.-% R-125, 35 Gew.-% R-134a und 15 Gew.-% R-143a.

6. Zusammensetzung nach einem der vorhergehenden Ansprüche, **dadurch gekennzeichnet, dass** sie besteht aus 15 Gew.-% R-32, 25 Gew.-% R-125, 50 Gew.-% R-134a und 10 Gew.-% R-143a.

7. Kältemittel, das eine Zusammensetzung nach den Ansprüche 1 bis 6 umfasst.

8. System zur Wärmeübertragung, welches das Kältemittel nach Anspruch 7 enthält.
